# EUROPEAN PATENT SPECIFICATION

(11) **EP 1 481 824 B1**
(45) Date of publication and mention of the grant of the patent: **19.07.2006**
(21) Application number: 04076462.3
(22) Date of filing: 17.05.2004
(51) Int. Cl.: B60G 7/02, B60G 11/10, B60G 9/00

(54) **Axle suspension**
Achsaufhängung
Suspension d'essieu

(30) Priority: 27.05.2003 NL 1023548
(43) Date of publication of application: 01.12.2004
(73) Proprietor: WEWELER NEDERLAND B.V., 7332 AP Apeldoorn (NL)
(72) Inventor: Aalderink, Derk Geert, 7245 NV Laren (NL)
(74) Representative: Brookhuis, Hendrik Jan Arnold

(56) References cited:
- EP-A- 0 421 556
- EP-A- 0 890 501
- EP-A- 0 995 664
- EP-A- 1 057 716
- EP-A- 1 284 208
- DE-A- 2 232 935
- DE-A- 2 618 191
- DE-U- 20 300 428

## Description

The invention relates to an axle suspension according to the preamble of claim 1.

In EP 1 284 208, on which the preamble of claim 1 is based, is disclosed an axle suspension with a bearing bracket. In the axle suspension a strut is fitted which supports a side plate of the bracket in the transverse direction in the vicinity of the free end.

In DE 2 232 935 is disclosed an axle suspension with a bearing bracket, in which a strut is attached to a side plate and extends upwardly towards a transverse chassis beam.

In EP 1 057 716 and EP 995 664 is disclosed another type of axle suspension, in which the bearing brackets on each side of the vehicle are interconnected by a horizontal transverse beam to absorb transverse forces. Furthermore there are tensionable struts present which extend obliquely upwardly towards a chassis part higher up.

Still another axle suspension is known from EP 0 421 556. In the case of the known axle suspension a transverse section which connects the bearing brackets is provided. The bearing bracket is provided with a welding plate against which the transverse section is welded. The axle suspension further comprises two strut elements, which are connected at one end to the chassis and extend obliquely inwards and downwards towards the centre of the transverse section and are connected there to the transverse section by welding or a bolted connection. The transverse section and the strut element absorb the transverse forces which are exerted by the bearing arm upon the bearing bracket. A disadvantage is that in the case of this strut construction a transverse section is needed to ensure that the transverse forces exerted by the bearing arm upon the bearing bracket are adequately absorbed.

The object of the invention is to provide an improved axle suspension.

This object is achieved by an axle suspension of the type described above, characterized in that the strut element extends from the bearing bracket obliquely upwards in the transverse direction to a chassis part higher up and is connected to the bearing bracket in such a way that the axis of the hinge bolt and the neutral line of the strut element intersect each other at the position of or near a side plate of the bearing bracket.

The axle suspension according to the invention provides a construction in which the transverse forces transmitted by the bearing arm by way of the hinge bolt to the bearing bracket are absorbed directly by the strut elements at the position at which said forces are acting, so that no moments can arise in the construction. This has the advantage that a lighter construction will suffice.

In a preferred embodiment the strut element is connected to the bearing bracket by means of the hinge bolt. This has the advantage that the strut elements can be fitted at the same time as that at which the bearing arm is being mounted in the bearing bracket, and for the mounting of the strut elements it is no longer necessary to weld them to the chassis or the bearing bracket. This latter point is advantageous, for example when a chassis is fully welded and is subsequently being provided with a protective coating. The bolted joint means that it is not necessary to damage the protective layer by welding work later on.

Further preferred embodiments are described in subclaims 3 - 11.

The invention further relates to a vehicle according to claim 12.

The invention will be explained in greater detail below with reference to the drawing, in which:
Fig. 1 shows a diagrammatic side view of an axle suspension;
Fig. 2 shows a perspective view of a bearing bracket;
Fig. 3 shows a diagrammatic cross section of the chassis at the position of the axle suspension, viewed in the normal direction of travel;
Fig. 4 shows a perspective view of a bearing bracket with a strut connecting piece of a preferred embodiment of the invention;
Fig. 5 shows an exploded view of a part of another preferred embodiment of the invention;
Fig. 6 shows a perspective view of a bearing bracket with a strut connecting piece of yet another preferred embodiment of the invention;
Fig. 7 shows a perspective view of the strut connecting piece of Fig. 6; and
Fig. 8 shows a diagrammatic cross section of the chassis at the position of the axle suspension, viewed in the normal direction of travel, in which the axle suspension is provided with the strut connecting piece of Fig. 6.

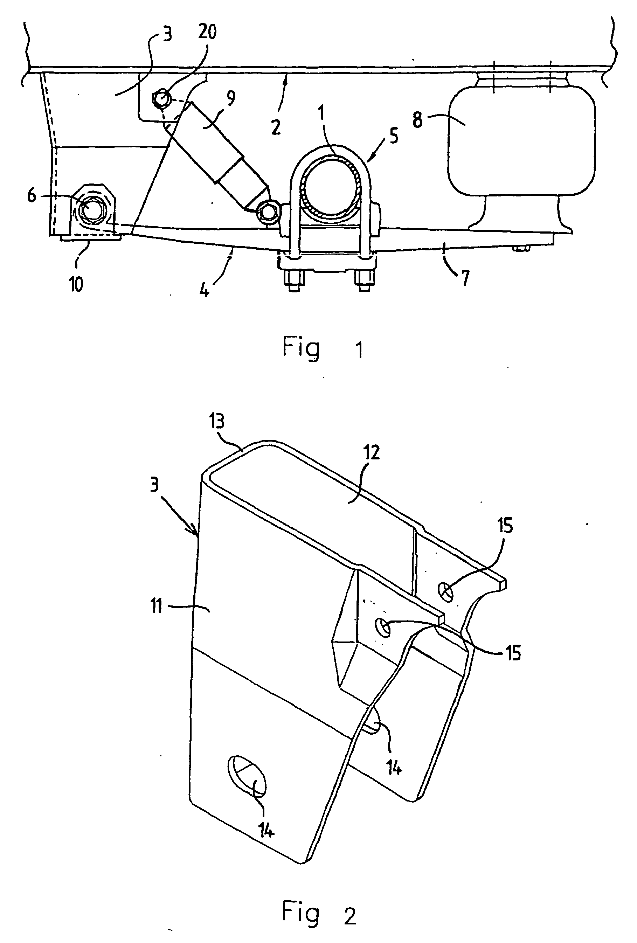

Fig. 1 shows diagrammatically an axle suspension of an axle assembly of a vehicle. The axle is indicated by reference numeral 1. The axle 1, on which one or more wheels are fitted at both ends, is shown as a hollow, round axle. The axle 1 can, however, also be square or have another cross section. The vehicle is normally provided with an axle suspension on both sides.

The axle suspension comprises a bearing bracket 3 fixed to a chassis beam 2 of the vehicle and a bearing arm 4 for the axle 1, which bearing arm is hinged to the bearing bracket 3 and extends in the longitudinal direction of the vehicle. The axle is immovably fixed in a known manner by means of a U-shaped clamp 5 on the bearing arm 4. In the embodiment shown, the bearing arm 4 extends with an end part 7 to a point beyond the axle 1. A gas spring 8 is provided between this end part 7 and the chassis 2. A shock absorber 9 is further provided between the bearing arm 4 and the bearing bracket 3.

A possible embodiment of a bearing bracket 3 is shown by way of example in Fig. 2. The bearing bracket 3 in this example is substantially U-shaped and comprises two side plates 11 and 12 and an intermediate plate 13 provided between them. Viewed in the direction of travel, the bearing bracket 3 is open towards the rear. The bearing bracket 3 is welded onto the chassis beam 2 at the top edge, or is connected to the chassis beam 2 in another way. It is also possible to have an embodiment of the bearing bracket 3 in which the bearing bracket 3 is in the form of two loose side plates that are connected to the chassis.

The side plates 11 and 12 are provided with holes 14 for fixing the bearing arm 4 and holes 15 for fixing the shock absorber 9. The holes 14 are slotted holes with the longitudinal axis parallel to the longitudinal direction of the vehicle. The side plates 11 and 12 are not flat. The bearing bracket 3 is narrower on the top side to be fixed to the chassis 2 than it is on the bottom side.

The bearing arm 4 is fixed on the bearing bracket 3 by means of a hinge bolt 6, which is inserted through the slotted holes 14 intended for it in the side plates of the bearing bracket 3. The bearing arm 5 is further fixed to the bearing bracket 3 by way of a special adjusting element 10, by means of which the position of the hinge bolt 6 of the bearing arm 5 can be adjusted relative to the bearing bracket 3 in the slotted holes 14, and thus in the longitudinal direction of the vehicle. Such an adjusting element 10 is also known as a wear plate and can be in the form of a plate which rests against the inside of the side plate 11, 12 of the bearing bracket 3, but can also be a U-shaped bracket which grips round the side plate 11, 12 of bearing bracket 3.

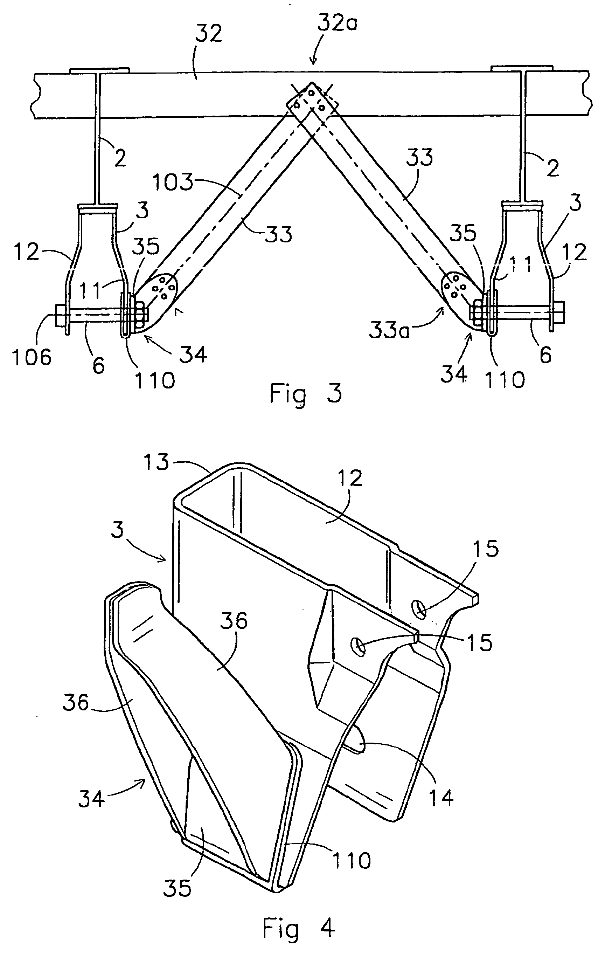

Fig. 3 shows a cross section of the chassis at the position of the axle suspension. The chassis beams 2 are connected at the top side to a cross beam 32. A strut element 33 extends on each of the sides from the centre area 32a of the cross beam 32 obliquely downwards and outwards in the direction of the bearing bracket 3. The strut element 33 can be connected to the cross beam 32 by means of, for example, a riveted joint, a bolted joint, a welded joint or another type of joint.

On the other end 33a the strut element 33 is connected to a strut connecting piece 34 with a base plate 35, which base plate in the mounted state rests against the adjusting element 110, which in this example is in the form of a U-shaped bracket, and thus runs parallel to the side plate 11 of the bearing bracket. The base plate 35 is fixed on the bearing bracket by means of the hinge bolt 6. In the figure the neutral line of the strut 33 is shown as a dotted line and is indicated by reference numeral 103. The axis of the hinge bolt 6 is indicated by reference numeral 106. The strut element 33 is fitted in such a way that the neutral line 103 of said strut element and the axis 106 of the hinge bolt 6 intersect each other approximately at the level of the slotted hole 14 in the side plate 11 of the bearing bracket.

The bearing bracket 3 with the strut connecting piece 34 is shown in Fig. 4. Two upright plates 36 extend from the base plate 35, each gripping on one side of the corresponding end 33a (see Fig. 3) of the strut element 33. The upright plates 36 are connected to the corresponding end 33a of the strut by means of welding or bolting, or in another way.

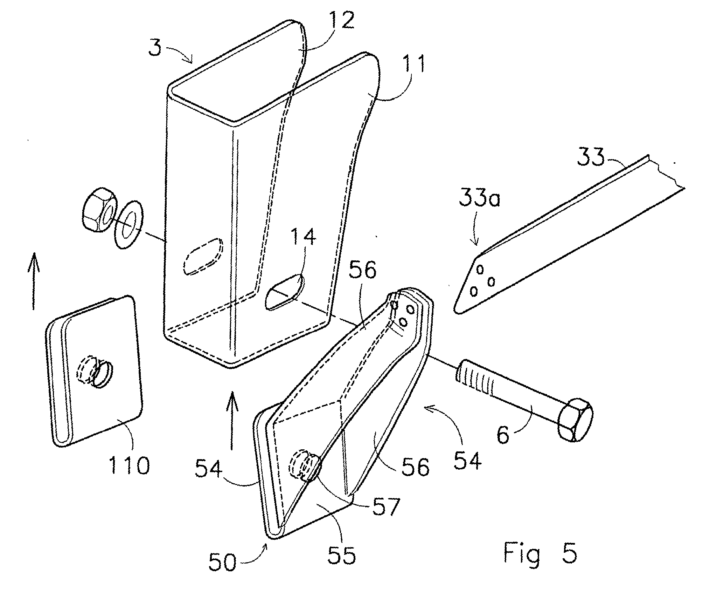

Fig. 5 shows a variant of the strut connection of Figs. 3 and 4. This embodiment largely corresponds to the embodiment shown in Figs. 3 and 4. Corresponding parts are therefore indicated by the same reference numerals as those above.

In the case of this embodiment the U-shaped adjusting bracket and the strut connecting piece are integrated to form one part. Fig. 5 shows a strut connecting piece 54 in the form of a U-shaped bracket 50, which is fitted on the side plate 11 of the bearing bracket. The U-shaped bracket 50 is comparable to the adjusting bracket 110 fitted on the other side plate 12 of the bearing bracket 3. One leg of the U-shaped bracket 50 forms a base plate 55, which is comparable to the base plate 35 in Fig. 4. The other leg 54 of the bracket 50 rests against the side plate 11 on the inside of the bearing bracket 3 and has the function of a wear plate. Holes 57 are provided in the legs 54, 55 of the bracket 50, through which holes the hinge bolt 6 is inserted during the fitting. Just as described in the case of the embodiment of Fig. 4, two upright plates 56 extend from the base plate 55, which plates can be connected to the corresponding end 33a of the strut by means of welding or bolting, or in another way.

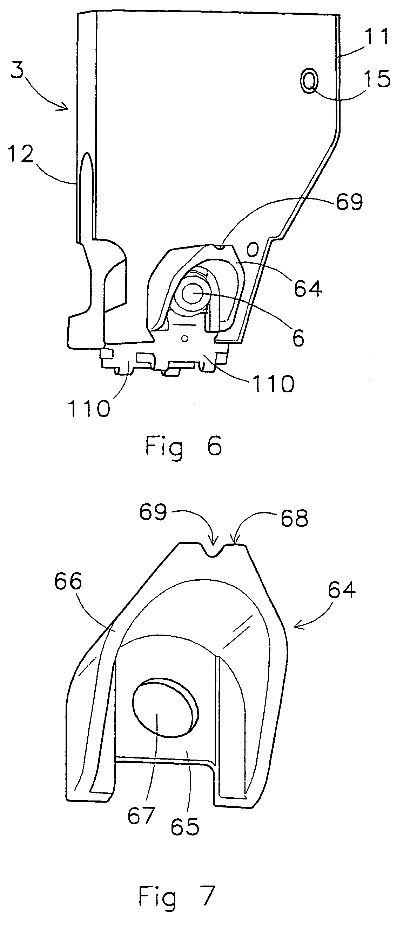

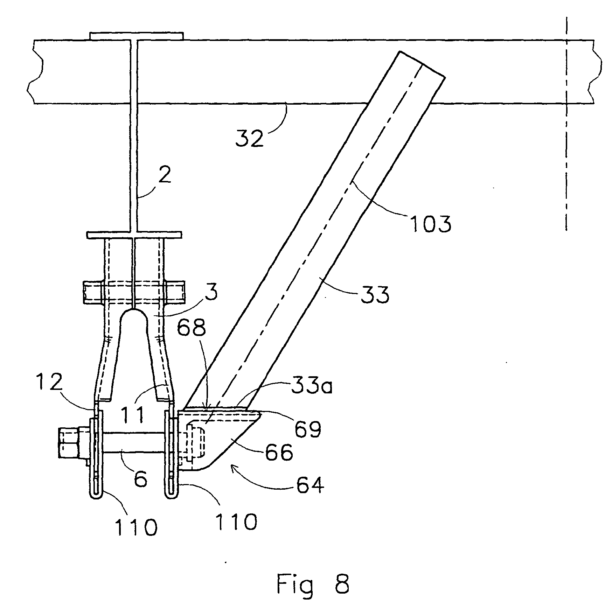

Figs. 6 - 8 show a bearing bracket 3 with a strut connecting piece 64. Parts corresponding to the embodiments illustrated above are given the same reference numerals. As can be seen in Fig. 7, in the case of this embodiment the strut connecting piece 64 is in the form of a base plate 65 provided with a hole 67 through which the hinge bolt 6 is inserted during the fitting. An upright wall 66 is provided on the base plate 65. The wall 66 is of a substantially semi-circular shape and in the fitted state (Figs. 6 and 8) is directed with the hollow side facing downwards. A groove 69 is provided on the top side 68 of the wall 66. The end 33a of a strut element 33 can be laid in this groove 69 during the fitting, as shown in Fig. 8, after which the end 33a is welded down on the upright wall 64 along the groove 69 on the top side 68. The strut connecting piece 64 is preferably produced by casting.

In the embodiments shown, a separate strut connecting piece is present in each case. It must, however, be understood that this is not essential according to the invention. An embodiment, not shown, in which the end of the strut element 33 is designed in such a way that said end can be connected directly to the bearing bracket 3 also, for example, falls within the scope of protection of the invention.

## Claims

1. Axle suspension for suspending an axle assembly from a chassis of a vehicle, which axle suspension comprises on each side of the vehicle a bearing bracket (3) with two side plates (11, 12), that is fixed on the chassis, and also a bearing arm (4) for the axle (1), which bearing arm (4) extends in the longitudinal direction of the vehicle and is hinged to the bearing bracket (3) by means of a hinge bolt (6), and which axle suspension further comprises a strut element (33) for absorbing transverse forces, which strut element (33) is connected to the bearing bracket (3), wherein the strut element (33) is attached to a side plate (11) of the bearing bracket (3) and extends from the bearing bracket (3) obliquely upwards in the transverse direction to a chassis part (32) higher up **characterized in that** the strut element (33) is connected to the bearing bracket (3) in such a way that the axis of the hinge bolt (6) and the neutral line of the strut element (33) intersect each other at the position of or near the side plate (11), that the strut element (33) is attached to.

2. Axle suspension according to claim 1, **characterized in that** a strut connecting piece (34; 54; 64) is present between the bearing bracket (3) and an end of the strut element (33), in order to connect the strut element (33) and the bearing bracket (3) to each other.

3. Axle suspension according to claim 1 or 2, **characterized in that** the strut element (33) is connected to the bearing bracket (3) by means of the hinge bolt (6).

4. Axle suspension according to claim 2, **characterized in that** the strut connecting piece (34; 54; 64) is connected to the bearing bracket (3) by means of the hinge bolt (6).

5. Axle suspension according to claim 2, **characterized in that** the strut connecting piece (34; 54; 64) is connected to the bearing bracket (3) by means of a bolted joint (6).

6. Axle suspension according to claim 2, **characterized in that** the corresponding end (33a) of the strut element (33) and the strut connecting piece (64) are connected to each other by welding.

7. Axle suspension according to one of claims 2 or 3 - 5, **characterized in that** the strut connecting piece (34; 54; 64) comprises a base plate (35; 55; 65) and at least one plate (36; 56; 66) positioned transversely to it, the base plate (35; 55; 65) in the fitted state being situated parallel to a side wall (11) of the bearing bracket (3), and the upright plate (36; 56; 66) being connected to the corresponding end (33a) of the strut (33).

8. Axle suspension according to claim 7, **characterized in that** the strut connecting piece comprises two upright plates (36; 56), each gripping on one side of the corresponding end (33a) of the strut element (33).

9. Axle suspension according to claim 7 or 8, **characterized in that** a substantially U-shaped adjusting bracket (110) is provided on the bearing bracket (3), for the purpose of adjusting the position of the hinge bolt (6) in the bearing bracket (3), the legs of the U-shape gripping around the innermost (11) of the side plates of the bearing bracket (3) and being provided with holes for the insertion of the hinge bolt (6), and **in that** the base plate (35; 65) of the strut connecting piece (34; 64) in the fitted state rests against the leg of the adjusting bracket (110) situated on the outside of the bearing bracket (3).

10. Axle suspension according to claim 7 or 8, **characterized in that** the base plate (55) of the strut connecting piece (54) is formed by a leg of a substantially U-shaped adjusting bracket (50) fitted on the bearing bracket (3) for the purpose of adjusting the position of the hinge bolt (6) in the bearing bracket (3), the legs (54; 55) of the U-shape gripping around the innermost of the side plates of the bearing bracket (3) and being provided with holes (57) for the insertion of the hinge bolt (6).

11. Axle suspension according to claim 7, **characterized in that** the upright plate (66) of the strut connecting piece (64) is in the form of a substantially semi-circular wall (66) with the hollow side facing downwards, a groove (69) being provided on the top side of the wall (66), in which groove (69) the end (33a) of the strut element (33) is accommodated, and the strut element (33) being welded down on the upright plate (66) along the groove (69).

12. Vehicle provided with an axle suspension according to one of the preceding claims.

## Patentansprüche

1. Achsaufhängung zum Aufhängen einer Achsbaugruppe an einem Chassis eines Fahrzeugs, wobei die Achsaufhängung an jeder Seite des Fahrzeugs einen Lagerträger (3) mit zwei Seitenplatten (11, 12), der an dem Chassis befestigt ist, sowie einen Lagerarm (4) für die Achse (1) umfasst, sich der Lagerarm (4) in der Längsrichtung des Fahrzeugs erstreckt und mittels eines Gelenkbolzens (6) gelenkig an dem Lagerträger (3) angebracht ist und die Achsaufhängung des Weiteren ein Strebenelement (33) umfasst, das Querkräfte aufnimmt, wobei das Strebenelement (33) mit dem Lagerträger (3) verbunden ist und das Strebenelement (33) an einer Seitenplatte (11) des Lagerträgers (3) angebracht ist und sich von dem Lagerträger (3) in der Querrichtung schräg nach oben zu einem Chassisteil (32) weiter oben erstreckt, **dadurch gekennzeichnet, dass** das Strebenelement (33) mit dem Lagerträger (3) so verbunden ist, dass die Achse des Gelenkbolzens (6) und die Nulllinie des Strebenelementes (33) einander an der Position der Seitenplatte (11), an der das Strebenelement (33) angebracht ist, oder nahe daran schneiden.

2. Achsaufhängung nach Anspruch 1, **dadurch gekennzeichnet, dass** ein Streben-Verbindungsstück (34; 54; 64) zwischen dem Lagerträger (3) und einem Ende des Strebenelementes (33) vorhanden ist, um das Strebenelement (33) und den Lagerträger (3) miteinander zu verbinden.

3. Achsaufhängung nach Anspruch 1 oder 2, **dadurch gekennzeichnet, dass** das Strebenelement (33) mittels eines Gelenkbolzens (6) mit dem Lagerträger (3) verbunden ist.

4. Achsaufhängung nach Anspruch 2, **dadurch gekennzeichnet, dass** das Streben-Verbindungsstück (34; 54; 64) mittels des Gelenkbolzens (6) mit dem Lagerträger (3) verbunden ist.

5. Achsaufhängung nach Anspruch 2, **dadurch gekennzeichnet, dass** das Streben-Verbindungsstück (34; 54; 64) mittels einer Schraubverbindung (6) mit dem Lagerträger (3) verbunden ist.

6. Achsaufhängung nach Anspruch 2, **dadurch gekennzeichnet, dass** das entsprechende Ende (33a) des Strebenelementes (33) und das Streben-Verbindungsstück (64) miteinander durch Schweißen verbunden sind.

7. Achsaufhängung nach einem der Ansprüche 2 oder 3-5, **dadurch gekennzeichnet, dass** das Streben-Verbindungsstück (34; 54; 64) eine Grundplatte (35; 55; 65) und wenigstens eine Platte (36; 56; 66) umfasst, die quer dazu angeordnet ist, wobei die Grundplatte (35; 55; 65) in dem angebrachten Zustand parallel zu einer Seitenwand (11) des Lagerträgers (3) angeordnet ist und die aufrechtstehende Platte (36; 56; 66) mit dem entsprechenden Ende (33a) der Strebe (33) verbunden ist.

8. Achsaufhängung nach Anspruch 7, **dadurch gekennzeichnet, dass** das Streben-Verbindungsstück zwei aufrechtstehende Platten (36; 56) umfasst, die jeweils an einer Seite des entsprechenden Endes (33a) des Strebenelementes (33) greifen.

9. Achsaufhängung nach Anspruch 7 oder 8, **dadurch gekennzeichnet, dass** ein im Wesentlichen U-förmiger Einstellträger (110) an dem Lagerträger (3) vorhanden ist, um die Position des Gelenkbolzens (6) in dem Lagerträger (3) einzustellen, wobei die Schenkel der U-Form um die innerste (11) der Seitenplatten des Lagerträgers (3) herum greifen und mit Löchern zum Einführen des Gelenkbolzens (6) versehen sind, und dass die Grundplatte (35; 65) des Streben-Verbindungsstücks (34; 64) in dem angebrachten Zustand an dem Schenkel des Einstellträgers (110) anliegt, der an der Außenseite des Lagerträgers angeordnet ist.

10. Achsaufhängung nach Anspruch 7 oder 8, **dadurch gekennzeichnet, dass** die Grundplatte (55) des Streben-Verbindungsstücks (54) durch einen Schenkel eines im Wesentlichen U-förmigen Einstellträgers (50) gebildet wird, der an dem Lagerträger (3) angebracht ist, um die Position des Gelenkbolzens (6) in dem Lagerträger (3) einzustellen, wobei die Schenkel (54; 55) der U-Form um die innerste der Seitenplatten des Lagerträgers (3) herum greifen und mit Löchern (57) zum Einführen des Gelenkbolzens (6) versehen sind.

11. Achsaufhängung nach Anspruch 7, **dadurch gekennzeichnet, dass** die aufrechtstehende Platte (66) des Streben-Verbindungsstücks (64) die Form einer im Wesentlichen halbkreisförmigen Wand (66) hat, wobei die hohle Seite nach unten gewandt ist, eine Nut (69) an der Oberseite der Wand (66) vorhanden ist in der Nut (69) das Ende (33a) des Strebenelementes (33) aufgenommen ist und das Strebenelement (33) entlang der Nut (69) an der aufrechtstehenden Platte (66) angeschweißt ist.

12. Fahrzeug, das mit einer Achsaufhängung nach einem der vorangehenden Ansprüche versehen ist.

## Revendications

1. Suspension d'essieu pour suspendre un assemblage d'essieu à partir d'un châssis d'un véhicule, laquelle suspension d'essieu comprend de chaque côté du véhicule un support de palier (3) avec deux plaques latérales (11, 12) qui est fixé sur le châssis, ainsi qu'un bras de support (4) pour l'essieu (1), lequel bras de support (4) s'étend dans le sens de la longueur du véhicule et est articulé sur le support de palier (3) au moyen d'un boulon d'articulation (6), et laquelle suspension d'essieu comprend en outre une jambe de force (33) pour absorber des forces transversales, laquelle jambe de force (33) est reliée au support de palier (3), dans laquelle la jambe de force (33) est fixée à une plaque latérale (11) du support de palier (3) et s'étend obliquement vers le haut dans le sens transversal depuis support de palier (3) vers une partie de châssis (32) située plus haut, **caractérisée en ce que** la jambe de force (33) est reliée au support de palier (3) de manière à ce que l'axe du boulon d'articulation (6) et la ligne neutre de la jambe de force (33) soient concourants au niveau de la position ou à proximité de la plaque latérale (11) à laquelle la jambe de force (33) est fixée.

2. Suspension d'essieu selon la revendication 1, **caractérisée en ce qu'**une pièce de liaison pour la jambe de force (34 ; 54 ; 64) est présente entre le support de palier (3) et une extrémité de la jambe de force (33), afin de relier la jambe de force (33) et le support de palier (3) l'un à l'autre.

3. Suspension d'essieu selon la revendication 1 ou 2, **caractérisée en ce que** la jambe de force (33) est reliée au support de palier (3) au moyen du boulon d'articulation (6).

4. Suspension d'essieu selon la revendication 2, **caractérisée en ce que** la pièce de liaison pour la jambe de force (34 ; 54 ; 64) est reliée au support de palier (3) au moyen du boulon d'articulation (6).

5. Suspension d'essieu selon la revendication 2, **caractérisée en ce que** la pièce de liaison pour la jambe de force (34 ; 54 ; 64) est reliée au support de palier (3) au moyen d'un assemblage boulonné (6).

6. Suspension d'essieu selon la revendication 2, **caractérisée en ce que** l'extrémité correspondante (33a) de la jambe de force (33) et la pièce de liaison pour la jambe de force (64) sont reliées l'une à l'autre par soudure.

7. Suspension d'essieu selon l'une des revendications 2 ou 3 à 5, **caractérisée en ce que** la pièce de liaison pour la jambe de force (34 ; 54 ; 64) comprend une plaque de base (35 ; 55 ; 65) et au moins une plaque (36 ; 56 ; 66) positionnée transversalement à celle-ci, la plaque de base (35 ; 55 ; 65) étant située, en position installée, en parallèle à une paroi latérale (11) du support de palier (3), et la plaque verticale (36 ; 56 ; 66) étant reliée à l'extrémité correspondante (33a) de la jambe de force (33).

8. Suspension d'essieu selon la revendication 7, **caractérisée en ce que** la pièce de la liaison pour la jambe de force comprend deux plaques verticales (36 ; 56), chacune enserrant un côté de l'extrémité correspondante (33a) de la jambe de force (33).

9. Suspension d'essieu selon la revendication 7 ou 8, **caractérisée en ce qu'**un support de réglage sensiblement en U (110) est prévu sur le support de palier (3), dans le but d'ajuster la position du boulon d'articulation (6) dans le support de palier (3), les jambes du U enserrant la zone la plus centrale (11) des plaques latérales du support de palier (3) et étant munies de trous pour insérer le boulon d'articulation (6), et **en ce que** la plaque de base (35 ; 65) de la pièce de liaison pour la jambe de force (34 ; 64) repose, en position installée, contre la jambe du support de réglage (110) située sur l'extérieur du support de palier (3).

10. Suspension d'essieu selon la revendication 7 ou 8, **caractérisée en ce que** la plaque de base (55) de la pièce de liaison pour la jambe de force (54) est formée par une jambe d'un support de réglage sensiblement en U (50) fixée sur le support de palier (3) dans le but d'ajuster la position du boulon d'articulation (6) dans le support de palier (3), les jambes (54 ; 55) du U enserrant la zone la plus centrale des plaques latérales du support de palier (3) et étant munies de perçages (57) pour insérer le boulon d'articulation (6).

11. Suspension d'essieu selon la revendication 7, **caractérisée en ce que** la plaque verticale (66) de la pièce de liaison pour la jambe de force (64) est réalisée sous la forme d'une paroi sensiblement semi-circulaire (66) avec le côte creux dirigé vers le bas, une rainure (69) étant prévue sur le côté supérieur de la paroi (66), rainure (69) dans laquelle est logée l'extrémité (33a) de la jambe de force (33), et la jambe de force (33) étant soudée sur la plaque verticale (66) le long de la rainure (69).

12. Véhicule muni d'une suspension d'essieu selon l'une des revendications précédentes.
